# EUROPEAN PATENT SPECIFICATION

(11) **EP 4 204 365 B1**
(45) Date of publication and mention of the grant of the patent: **18.09.2024**
(21) Application number: 21777580.8
(22) Date of filing: 26.08.2021
(51) Int. Cl.: C02F 1/28, C02F 101/20, C02F 101/32, C02F 103/18

(54) **SYSTEM AND METHOD FOR THE TREATMENT OF POLLUTED WATERS, IN PARTICULAR WITH HEAVY METALS**
ANLAGE UND VERFAHREN ZUR BEHANDLUNG VON VERUNREINIGTEM WASSER, INSBESONDERE MIT SCHWERMETALLEN
SYSTÈME ET PROCÉDÉ DE TRAITEMENT DES EAUX POLLUÉES, EN PARTICULIER PAR DES MÉTAUX LOURDS

(30) Priority: 27.08.2020 IT 202000020536
(43) Date of publication of application: 05.07.2023
(73) Proprietor: Ecospray Technologies S.r.l., 27058 Voghera (IT)
(72) Inventor: ARCHETTI, Maurizio, 6653 Terre di Pedemonte - Verscio (CH); MURATORI, Luca, 15055 Pontecurone (IT)
(74) Representative: Giraldi, Elisa
(86) International application number: PCT/IB2021/057812
(87) International publication number: WO 2022/043905

(56) References cited:
- CN-A- 110 204 089
- JP-A- 2002 336 616
- JP-A- 2007 260 522
- JP-A- 2011 131 191
- JP-A- H10 309 567
- JP-A- S5 285 070
- US-A1- 2018 272 251

## Description

### FIELD OF THE INVENTION

The present invention belongs to the field of the treatment of waters contaminated by pollutants. In particular, the present invention belongs to the field of the treatment of contaminated waters containing heavy metals and/or hydrocarbons, in particular Polycyclic Aromatic Hydrocarbons (hereinafter PAHs) and/or powders or particulates. In detail, the present invention belongs to the field of the treatment of contaminated waters used for the abatement of fumes generated by the combustion of fuel oil, in particular heavy oil. Therefore, the present invention relates to a system for treating contaminated waters containing heavy metals and/or hydrocarbons of the aforesaid type and/or powders or particulates resulting from the combustion of fuel oil, in particular heavy oil. The present invention also relates to a method for treating contaminated waters containing heavy metals and/or PAHs and/or powders or particulates resulting from the combustion of fuel oil, in particular heavy oil.

### BACKGROUND ART

In the field of both commercial and tourist navigation, the use of fuel oil, in particular heavy oil, is widespread for supplying the marine engines of large ships such as cruise ships, ferries, bulk carriers, car carriers, container ships and the like. In particular, heavy metals are present in a certain concentration in the heavy oil (HFO-heavy fuel oil) used as primary fuel for the marine engines of ships of the above type, which do not participate in the combustion and are thus released into the atmosphere. Furthermore, the fumes resulting from the combustion of heavy oil also contain, in varying percentages, hydrocarbons, in particular PAHs and powders or particulate matter.

Following the regulations which came into force on January 1, 2020, in order to be able to burn heavy oil with a sulfur content above 0.5%, ships are obliged to use a scrubber. In the simplest configuration thereof (Open Loop) a pump draws water from the sea, which is used inside a scrubber to remove sulfur oxides and is then discharged into the sea. The washing of fumes which occurs in the scrubber, in addition to capturing the Sox, is also capable of capturing a part of the particulate, which includes heavy metals, ash and hydrocarbons, therefore where the water outflowing from the scrubber and discharged into the sea is full of said heavy metals and/or PAHs and/or powders or particulates.

Therefore, there is the problem, perceived by the applicant of the present patent application, of how to remove or at least reduce the concentration of heavy metals and PAHs (as well as any powders or particulate matter possibly present) from the waters discharged from marine scrubbers before they are poured into the sea, where said heavy metals and/or PAHs may possibly be adhered to solid particles and therefore in suspension, possibly together with powders and/or particulates, in the water discharged from the scrubbers, while a fraction of said heavy metals and/or PAHs, dependent on various factors, is instead dissolved in water. Obviously, the removal from the water discharged from the scrubbers, both of the heavy metals and/or PAHs adhering to solid particles, and of the powders or particulates in suspension can be performed with filters suitable for the purpose and known per se, while on the contrary, it is not possible to remove heavy metals and/or PAHs in solution, i.e., dissolved in said waters with filters of known type. Therefore, it is the main object of the present invention to suggest and provide a solution for treating waters polluted by heavy metals and/or PAHs.

It is a further object of the present invention to suggest and provide a solution for treating waters polluted by heavy metals and/or PAHs (and possibly powders or particulate matter) resulting from the combustion of fuel oil, in particular heavy oil.

It is a not last object of the present invention to remove and/or at least reduce the concentration of heavy metals and/or PAHs as well as possibly of powders or particulates from the waters discharged from marine scrubbers before they are poured into the sea.

Finally, it is another object of the present invention to provide a solution of the aforesaid type which can be made and implemented at low cost, which can be implemented in simple and easy-to-execute methods, and which allows the removal or at least the reduction of the concentration of heavy metals and/or PAHs from the waters discharged from different scrubbers and used on different types of ships for treating combustion fumes.

### DESCRIPTION OF THE PRESENT INVENTION

In consideration of both the problems and the objects summarized above, the present invention relates to a filtering system for waters contaminated by pollutants, in particular for removing heavy metals and/or PAHs from said contaminated waters, said system comprising a duct (C) for the transit of said contaminated waters, said system comprising a tank (S) of activated carbon powders in communication with said duct (C) for the transit of said contaminated waters by introduction means (10) adapted to introduce said activated carbon powders into said duct (C), where said system comprises at least one filter (1) for said polluted waters added with said activated carbon powders in communication with said duct (C), said at least a first filter (1) being adapted to separate the products of the absorption of said pollutants by said activated carbon from said contaminated waters and to retain said products of the absorption of said pollutants by said activated carbon.

According to an embodiment, said system comprises at least two of said first filters (1) adapted to separate said products of the absorption of said pollutants by said activated carbon from said contaminated waters and to retain said products of the absorption of said pollutants by said activated carbon, in which said at least two first filters (1) are arranged in parallel and thus alternatively connectable to and isolable from said duct (C).

According to an embodiment, each of said at least two first filters (1) is alternatively connectable to and isolable from said duct (C) by means of at least one valve interposed between each of said at least two first filters (1) and said duct (C). In the present invention said system comprises means (11) for removing any gases from said duct (C), in which said means (11) for removing said possible gases are put in communication with said duct (C) downstream of the introduction point of said activated carbon powders into said duct (C) and upstream of said at least a first filter (1) for said polluted waters added with said activated carbon powders.

According to an embodiment, said system comprises means for regenerating said at least one filter adapted to remove from said at least a first filter (1) said retained products of the absorption of said pollutants by said activated carbon.

According to an embodiment, said means for regenerating said at least one filter comprise a first pump (2) in communication with said duct (C) downstream of said at least a first filter (1), where said first pump (2) is thus adapted to at least partially withdraw the outcoming waters from said at least a first filter (1), and where said first pump (2) is in communication with said at least a first filter (1) and adapted to reintroduce in counter-flow (counter-current) in said at least a first filter (1) at least part of the outcoming waters from said at least a first filter (1) and therefore to remove from said at least a first filter (1) said retained products of the absorption of said pollutants by said activated carbon.

According to an embodiment, said system comprises a second tank (3) in communication with said at least a first filter (1) and adapted to receive the waters introduced in counter-flow into said at least a first filter (1) by means of said first pump (2), said waters being then added with said products of the absorption of said pollutants by said activated carbon.

According to an embodiment, said system comprises a further filter (5) positioned downstream of said second tank (3) and adapted to further filter the outcoming waters from said second tank (3) and added with said products of the absorption of said pollutants by said activated carbon.

According to an embodiment, said further filter (5) is of the type comprising a filtering web or belt adapted to retain said products of the absorption of said pollutants by said activated carbon.

According to an embodiment, said filtering belt or web is removable, where the removal of said filtering belt or web results in the removal of said products of the absorption of said pollutants by said activated carbon from said further filter (5). The present invention also relates to a system for treating the fumes generated by the combustion of heavy oil, said system comprising a scrubber and means for introducing water into said scrubber, where said system comprises a system according to one of the embodiments of the present invention, where said scrubber is placed in communication with said duct (C) upstream of said first tank (S) of activated carbon powders, and therefore where the outcoming waters from said scrubber are introduced into said duct (C) upstream of said first tank (S) of activated carbon powders.

The present invention also relates to a method for filtering waters contaminated by pollutants, in particular for removing heavy metals and/or PAHs from said contaminated waters by means of a system according to one of the embodiments of the present invention, said method comprising the steps of:
introducing said activated carbon powders into said duct (C);
filtering said polluted waters added with said activated carbon powders by means of said at least a first filter (1);
separating the products of the absorption of said pollutants by said activated carbon from said contaminated waters by means of said at least a first filter (1);
removing said retained products of the absorption of said pollutants by said activated carbon from said at least a first filter (1).

According to an embodiment, said step of removing said retained products of the absorption of said pollutants by said activated carbon from said at least a first filter (1) comprises withdrawing at least part of the outcoming waters from said at least a first filter (1), and re-introducing in counter-flow at least part of the water withdrawn at the outlet by said at least a first filter (1) into said at least a first filter (1). According to an embodiment, said method comprises introducing the water introduced in counter-flow into said at least a first filter (1) into a second tank (3), said waters being thus added with said products of the absorption of said pollutants by said activated carbon, withdrawing the contained waters from said second tank (3), and filtering the waters withdrawn from said further tank (3) by means of a further filter (5).

According to an embodiment, said further filter (5) is of the type comprising a filtering belt or web adapted to retain said products of the absorption of said pollutants by activated carbon, where said filtering belt or web is removable, and where said method comprises removing said filtering belt or web from said further filter (5), and then removing said products of the absorption of said pollutants by said active carbon from said further filter (5).

### DESCRIPTION OF THE DRAWINGS

Further features and advantages of the invention will become more apparent from the following description of some preferred, but not exclusive, embodiments of the present invention depicted by way of indicative, non-limiting example in the drawings, in which:
- figure 1 shows the diagram of a system for treating and/or filtering waters contaminated by pollutants according to an embodiment of the present invention;
- figure 2 shows the diagram of the mutual arrangement of filters of the system according to an embedment of the present invention.

### DETAILED DESCRIPTION

The present invention finds particularly advantageous application in the treatment of waters discharged from marine scrubbers in order to remove or at least reduce the concentration of metals and/or PAHs (and/or any powders or particulate matter) contained therein and generated by the combustion of fuel oil, in particular heavy oil, this being the reason why the present invention will be described below with particular reference to the applications thereof in the field of the treatment of waters discharged from marine scrubbers for the above purposes. However, the applications of the present invention are not limited to the treatment of waters discharged from marine scrubbers; on the contrary, the present invention finds equally advantageous application in the field of the treatment of contaminated waters of any origin, in particular contaminated by heavy metals and/or PAHs. The present invention derives from the consideration according to which the treatment of a dry sludge offers considerable advantages with respect to the treatment of liquid sludges produced in the systems according to the known art, said liquid sludges being very complex to store and/or dispose of.

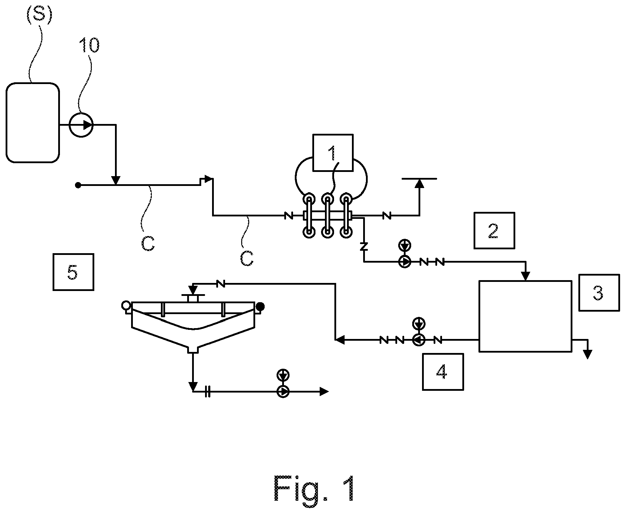

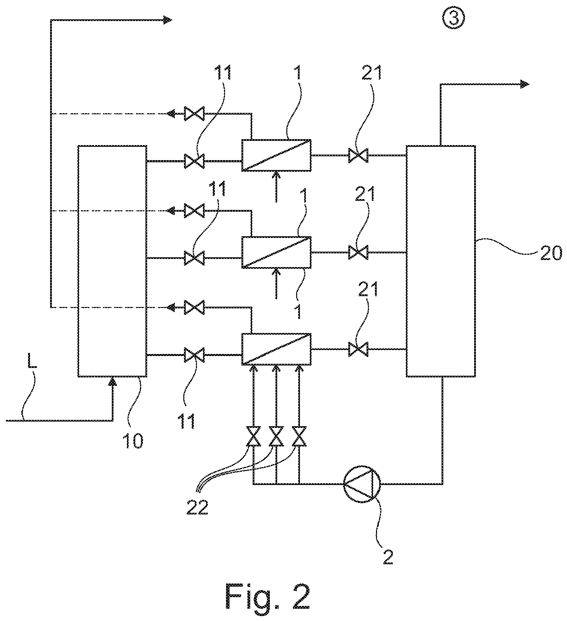

With reference to figures 1 and 2, the system depicted therein comprises a duct C adapted to allow the transit of a liquid, in particular the waters coming from a scrubber (not shown), said duct C thus being capable of being placed in communication with the discharge of one said scrubber. The system further comprises a first tank S adapted to contain activated carbon powders, and a pump 10 interposed between the tank S and the duct C for introducing the activated carbon powders into the duct C. According to an embodiment of the present invention, said activated carbon powders can be introduced into the duct C possibly in the form of an aqueous solution. Downstream of the introduction point of the activated carbon powders into the duct C, means 11 are present, in communication with the duct C, for removing any gases present in the duct C, where via said means 11 (substantially a container), the gases accumulated inside the container 11 above the water contained therein, are discharged to the outside, thus freeing the duct C from any gases which could affect or decrease the filtration efficiency of the waters envisaged along the duct C (see the following description.

Downstream of the container 11 there is a set of three filters 1 (where the number of filters can vary from a minimum of one filter), said three filters 1 being arranged and mutually connected in parallel and being adapted to be alternatively placed in communication with the duct C (so as to receive the waters in transit in the duct C) and disconnected from the duct C. This solution allows the regeneration (according to the modes explained below) of the filters 1 temporarily disconnected from the duct C and the contemporary use of the filters 1 in communication with the duct C and affected by the waters in transit. The duct C ends with a discharge terminal (see the arrow at the end of the duct C for the discharge of the filtered water outflowing from the set of filters 1, for example for pouring said clean waters into the sea.

The reference numeral 2 in figure 1 also identifies a pump for regenerating the filters 1 by means of which, in particular, part of the clean waters outflowing from the filters 1 is withdrawn and returned in counter-flow (in the opposite direction to the flow of contaminated waters in the duct C) into one or more filters 1 temporarily disconnected from the duct C in which the products of absorption by the activated carbon introduced into the duct C and the heavy metals and/or PAHs (as well as any powders or particulate matter) contained in the waters in transit and captured in said one or more filters 1 have reached a predefined accumulation level such as to require, for the further use of said one or more filters 1, the removal of said products of the absorption of said heavy metals and/or PAHs (hereinafter possibly defined as "products of the absorption") and any powders or particulate matter by said activated carbon accumulated in said one or more filters 1.

By means of the clean waters in counter-flow, said products of the absorption and said possible powders or particulate matter are removed from said one or more filters, where the outflowing waters in counter-flow from said one or more filters (said waters thus containing said products of the absorption of said heavy metals and/or PAHs and said possible powders or particulates by the activated carbon) are introduced into an intermediate tank 3. From the tank 3, by means of a further pump 4, the waters are introduced into an end filter 5 adapted to retain the products of the absorption of said heavy metals and/or PAHs and/or said possible powders or particulates by the activated carbon. The waters outflowing from the filter 5, therefore cleaned, can be discharged from the filter 5, for example poured into the sea. In particular, the end filter 5 is of the type comprising a removable web or belt adapted to retain said absorption products and/or said possible powders or particulates, therefore where the removal of the web or band from the filter 5 results in the removal from the filter 5 of the products of the absorption of heavy metals and/or PAHs and/or of any powders or particulate matter by the activated carbon, and thus in the cleaning of the filter 5, where the absorption products and any powders or particulates removed by said web or belt can be disposed of.

The operation of the system in figure 1, moreover at least in part anticipated above, can be described as follows.

By means of the pump 10, the activated carbon powders stored in the tank S are introduced into the duct C, thereby triggering the absorption by the activated carbon of the heavy metals and/or PAHs contained in solution (and thus dissolved) in the waters in transit in the duct C. The waters in transit in the duct C, at this point containing the products of the absorption of heavy metals and/or PAHs and any powders and/or particulate matter by the activated carbon are introduced into the filters 1 which thus retain both said absorption products and said powders and/or particulate matter, while the clean water outflowing from the filters can be poured into the sea, for example. By means of the pump 2, clean waters are reintroduced in counter-flow into the filters 1, thereby removing the accumulated and retained absorption products and/or said powders or particulates from the filters 1. The waters outflowing in counter-flow from the filters 1, thus containing the absorption products and any powders or particulate removed from the filters 1, are introduced into the tank 3 and from there into the end filter 5 adapted to separate said absorption products and said any powders or particulate matter from said waters, where the clean waters outflowing from the end filter 5 can for example be discharged into the sea.

With reference to figure 2, a description will be given below of the methods for mutually connecting the filters 1, as well as of the methods for connecting the filters 1 to the duct C.

As depicted, each of the filters 1 is interposed between an inlet or delivery manifold 10, connected to the duct C, and an outlet or discharge manifold 20. Furthermore, each of the filters 1 is interposed between a valve 11 and a valve 21, where the opening and closing according to methods which can be easily perceived from the diagram in figure 2, allow the communication between the manifold 10 and the manifold 20 (and thus the use of the filters 1) and the interruption of the connection between the manifold 10 and the manifold 20, and therefore the isolation of the filters 1, respectively.

As anticipated, the clean waters outflowing from the manifold 20, by means of the pump 2 and further valves 22, are partially selectively reintroduced in counter-flow into the filters 1 (those to be washed), where the water outflowing from the filters 1, in counter-flow with respect to the flow direction in the duct C, are introduced into the intermediate tank or container 3.

Thus, it has been demonstrated by the preceding description of the embodiments of the present invention, depicted in the drawings, that the present invention allows to achieve the preset objects and thus overcome the drawbacks found in the prior art.

In particular, as demonstrated, by means of the present invention a system is provided for the effective removal from contaminated waters of the heavy metals and/or PAHs contained therein and resulting for example but not exclusively from the combustion of fuel oil, in particular heavy oil.

Furthermore, the system and method according to the present invention allow to remove or at least reduce the concentration of heavy metals and/or PAHs, within the limits established by the regulations in force, from the waters discharged by marine scrubbers before they are poured into the sea.

Finally, the system and method according to the present invention are achievable and at low costs, respectively, according to methods which are simple and easy to perform, and allow the removal or at least the reduction of the concentration of heavy metals and/or PAHs from the waters discharged by different scrubbers and used on ships of different types for treating combustion fumes.

In this regard, it should be considered that, according to the known art, the activated carbon used in the industry for treating water (and possibly gas), is contained in a tank and placed on a fixed bed which is crossed by the flow of waters or gases to be treated. Considering that, for example in the case of the waters outflowing from marine scrubbers, the flow rates involved are decidedly high (hundreds of tons/hour), the tank with the bed of activated carbon would be of such dimensions as to compromise the installation thereof, in particular aboard ships.

On the contrary, by means of the system according to the present invention, only the installation of a tank for the storage of the powdered carbon is required, where the system requires only the periodic replacement of the filtering fabric from the end filter, thus being a much less demanding operation.

The present invention has been clarified above by means of the detailed description of the embodiments thereof depicted in the drawings; however, the present invention is not limited to the embodiments described above and depicted in the drawings but comprises all those variants of the described and depicted embodiments which will be immediate and obvious to those skilled in the art, without departing from the scope of the appended claims.

The scope of protection of the present invention is thus defined by the claims.

## Claims

1. A filtering system for waters contaminated by pollutants, in particular for removing or at least reducing the concentration of heavy metals and/or PAHs from said contaminated waters, said system comprising a duct (C) for the transit of said contaminated water, wherein it comprises a tank (S) with activated carbon powders in communication with said duct (C) for the transit of said contaminated water by introduction means (10) adapted to introduce said active carbon powders into said active duct (C), wherein said system comprises at least one filter (1) for said polluted water with said activated carbon powders added in communication with said duct (C), said at least a first filter (1) being adapted to separate the products of the absorption of said pollutants by said activated carbon from said contaminated water and to retain said absorption products, said system been **characterized in that** it comprises means (11) for removing any gases from said duct (C), **in that** said means (11) for removing said possible gases are put in communication with said duct (C) downstream of the introduction point of said activated carbon powders into said duct (C) and upstream of said at least a first filter (1) for said polluted waters added with said activated carbon powders.

2. A system according to claim 1, **characterized in that** it comprises at least two of said first filters (1) adapted to separate said products of the absorption of said pollutants by said activated carbon from said contaminated waters and to retain said products of the absorption of said pollutants by said activated carbon, and **in that** said at least two first filters (1) are arranged in parallel and thus alternatively connectable to and isolable from said duct (C), and therefore **in that** said contaminated water can be treated continuously by means of said at least two filters (1).

3. A system according to claim 2, **characterized in that** each of said at least two first filters (1) is alternatively connectable to and isolable from said duct (C) by means of at least one valve interposed between each of said at least two first filters (1) and said duct (C).

4. A system according to one of claims 1 to 3, **characterized in that** it comprises means for regenerating said at least one filter adapted to remove said retained products of the reaction between said activated carbon and said pollutants from said at least a first filter (1).

5. A system according to claim 4, **characterized in that** said means for regenerating said at least one filter comprise a first pump (2) in communication with said duct (C) downstream of said at least a first filter (1), **in that** said first pump (2) is thus adapted to at least partially withdraw the outcoming waters from said at least a first filter (1), and **in that** said first pump (2) is in communication with said at least a first filter (1) and adapted to reintroduce at least part of the outcoming waters from said at least a first filter (1) in said at least a first filter (1) and then to remove said retained products of the absorption of said pollutants by said activated carbon from said at least a first filter (1).

6. A system according to claim 5, **characterized in that** it comprises a second tank (3) in communication with said at least a first filter (1) and adapted to receive the waters introduced in counter-flow into said at least a first filter (1) by means of said first pump (2), said waters being then added with said products of the absorption of said pollutants by said activated carbon.

7. A system according to claim 6, **characterized in that** it comprises a further filter (5) positioned downstream of said second tank (3) and adapted to further filter the outcoming waters from said second tank (3) and added with said products of the absorption of said pollutants by said activated carbon.

8. A system according to claim 7, **characterized in that** said further filter (5) is of the type comprising a filtering web or belt adapted to retain said products of the absorption of said pollutants by said activated carbon.

9. A system according to claim 8, **characterized in that** said filtering belt or web is removable, wherein the removal of said filtering belt or web results in the removal of said products of the absorption of said pollutants by said activated carbon from said further filter (5).

10. A system for treating fumes generated by the combustion of heavy oil, said system comprising a scrubber and means for introducing water into said scrubber, **characterized in that** it comprises a system according to one of claims 1 to 9, **in that** said scrubber is placed in communication with said duct (C) upstream of said first tank (S) with activated carbon powders, and therefore **in that** the outcoming waters from said scrubber are introduced into said duct (C) upstream of said first tank (S) with activated carbon powders.

11. A method for filtering waters contaminated by pollutants, in particular for removing heavy metals and/or PAHs from said contaminated waters by means of a system according to one of claims 1 to 9, said method comprising the steps of:
introducing said activated carbon powders into said duct (C);
filtering said polluted waters added with said activated carbon powders by means of said at least a first filter (1);
separating the products of the absorption of said pollutants by said activated carbon from said contaminated waters by means of said at least a first filter (1);
removing said retained products of the absorption of said pollutants by said activated carbon from said at least a first filter (1).

12. A method according to claim 11, **characterized in that** said step of removing said retained products of the absorption of said pollutants by said activated carbon from said at least a first filter (1) comprises withdrawing at least part of the outcoming waters from said at least a first filter (1), and re-introducing in counter-flow at least part of the water withdrawn at the outlet from said at least a first filter (1) into said at least a first filter (1).

13. A method according to claim 12, **characterized in that** it comprises introducing the water introduced in counter-flow into said at least a first filter (1) into a second tank (3), said waters being thus added with said products of the absorption of said pollutants by said activated carbon, withdrawing the contained waters from said second tank (3), and filtering the waters withdrawn from said further tank (3) by means of a further filter (5).

14. A method according to claim 13, **characterized in that** said further filter (5) is of the type comprising a filtering belt or web adapted to retain said products of the absorption of said pollutants by activated carbon, **in that** said filtering belt or web is removable, and **in that** said method comprises removing said filtering belt or web from said further filter (5), and then removing said products of the absorption of said pollutants by said active carbon from said further filter (5).

## Patentansprüche

1. Ein Filtersystem für durch Schadstoffe verunreinigtes Wasser, insbesondere zur Entfernung oder zumindest zur Verringerung der Konzentration von Schwermetallen und/oder PAK aus dem verunreinigten Wasser, wobei das System eine Leitung (C) für den Durchgang des verunreinigten Wassers aufweist, wobei es einen Tank (S) mit Aktivkohlepulvern aufweist, der mit der Leitung (C) für den Durchgang des verunreinigten Wassers durch Einführungsmittel (10) in Verbindung steht, die angepasst sind, um die Aktivkohlepulver in die aktive Leitung (C) einzubringen, wobei das System mindestens einen Filter (1) für das verunreinigte Wasser mit den zugegebenen Aktivkohlepulvern in Verbindung mit der Leitung (C) aufweist, wobei der mindestens eine erste Filter (1) geeignet ist, die Produkte der Absorption der Verunreinigungen durch die Aktivkohle von dem verunreinigten Wasser zu trennen und die Absorptionsprodukte zurückzuhalten, wobei das System **dadurch gekennzeichnet ist, dass** es Mittel (11) zum Entfernen jeglicher Gase aus der Leitung (C) aufweist, dass die Mittel (11) zum Entfernen der möglichen Gase in Verbindung mit der Leitung (C) stromabwärts des Einführungspunkts der Aktivkohlepulver in die Leitung (C) und stromaufwärts des mindestens einen ersten Filters (1) für das mit den Aktivkohlepulvern verunreinigten Wasser angeordnet sind.

2. Ein System nach Anspruch 1, **dadurch gekennzeichnet, dass** es mindestens zwei der ersten Filter (1) aufweist, dazu geeignet sind, die Produkte der Absorption der Schadstoffe durch die Aktivkohle von dem verunreinigten Wasser zu trennen und die Produkte der Absorption der Schadstoffe durch die Aktivkohle zurück zu halten, und dass die mindestens zwei ersten Filter (1) parallel angeordnet sind und somit abwechselnd an die Leitung (C) angeschlossen und von dieser isoliert werden können, und dass daher das verunreinigte Wasser mittels der mindestens zwei Filter (1) kontinuierlich behandelt werden kann.

3. Ein System nach Anspruch 2, **dadurch gekennzeichnet, dass** jeder der mindestens zwei ersten Filter (1) alternativ mit der Leitung (C) verbunden und von dieser getrennt werden kann, und zwar mittels mindestens eines Ventils, das zwischen jedem der mindestens zwei ersten Filter (1) und der Leitung (C) angeordnet ist.

4. Ein System nach einem der Ansprüche 1 bis 3, **dadurch gekennzeichnet, dass** es Mittel zum Regenerieren des mindestens einen Filters aufweist, die geeignet sind, die zurückgehaltenen Produkte der Reaktion zwischen der Aktivkohle und den Schadstoffen aus dem mindestens einen ersten Filter (1) zu entfernen.

5. Ein System nach Anspruch 4, **dadurch gekennzeichnet, dass** die Mittel zum Regenerieren des mindestens einen Filters eine erste Pumpe (2) aufweist, die mit der Leitung (C) stromabwärts des mindestens einen ersten Filters (1) in Verbindung steht, dass die erste Pumpe (2) somit geeignet ist, das aus dem mindestens einen ersten Filter (1) austretende Wasser zumindest teilweise abzuziehen, und dass die erste Pumpe (2) mit dem mindestens einen ersten Filter (1) in Verbindung steht und geeignet ist, mindestens einen Teil der aus dem mindestens einen ersten Filter (1) austretenden Wasser wieder in den mindestens einen ersten Filter (1) einzuleiten und dann die zurückgehaltenen Produkte der Absorption der Schadstoffe durch die Aktivkohle aus dem mindestens einen ersten Filter (1) zu entfernen.

6. Ein System nach Anspruch 5, **dadurch gekennzeichnet, dass** es einen zweiten Tank (3) aufweist, der mit dem mindestens einen ersten Filter (1) in Verbindung steht und so beschaffen ist, dass er das mittels der ersten Pumpe (2) im Gegenstrom in den mindestens einen ersten Filter (1) eingeleitete Wasser aufnimmt, wobei das Wasser dann mit den Produkten der Absorption der Schadstoffe durch die Aktivkohle versetzt werden.

7. Ein System nach Anspruch 6, **dadurch gekennzeichnet, dass** es einen weiteren Filter (5) aufweist, der stromabwärts des zweiten Tanks (3) angeordnet ist und dazu geeignet ist, das aus dem zweiten Tank (3) austretende Wasser weiter zu filtern und mit den Produkten der Absorption der Schadstoffe durch die Aktivkohle versetzt wird.

8. Ein System nach Anspruch 7, **dadurch gekennzeichnet, dass** der weitere Filter (5) von dem Typ ist, der ein Filtergewebe oder eine Filterschicht aufweist, das bzw. der geeignet ist, die Produkte der Absorption der Schadstoffe durch die Aktivkohle zurückzuhalten.

9. Ein System nach Anspruch 8, **dadurch gekennzeichnet, dass** die Filterschicht oder das Filtervlies entfernbar ist, wobei die Entfernung der Filterschicht oder des Filtervlieses dazu führt, dass die Produkte der Absorption der Schadstoffe durch die Aktivkohle aus dem weiteren Filter (5) entfernt werden.

10. Ein System zur Behandlung von Rauch, der durch die Verbrennung von Schweröl erzeugt wird, wobei das System einen Wäscher und Mittel zum Einleiten von Wasser in den Wäscher aufweist, **dadurch gekennzeichnet, dass** es ein System nach einem der Ansprüche 1 bis 9 aufweist, dass der Wäscher in Verbindung mit der Leitung (C) stromaufwärts des ersten Tanks (S) mit Aktivkohlepulvern angeordnet ist, und dass daher das aus dem Wäscher austretende Wasser in die Leitung (C) stromaufwärts des ersten Tanks (S) mit Aktivkohlepulvern eingeleitet wird.

11. Ein Verfahren zum Filtern von durch Schadstoffe verunreinigtem Wasser, insbesondere zum Entfernen von Schwermetallen und/oder PAKs aus dem verunreinigten Wasser mittels eines Systems nach einem der Ansprüche 1 bis 9, wobei das Verfahren die folgenden Schritte aufweist:
Einbringen des Aktivkohlepulvers in die Leitung (C);
Filtern des mit den Aktivkohlepulvern versetzten verunreinigten Wassers mit Hilfe des mindestens einen ersten Filters (1);
Abtrennen der Produkte der Absorption der Schadstoffe durch die Aktivkohle von dem verunreinigten Wasser mit Hilfe des mindestens einen ersten Filters (1);
Entfernen der zurückgehaltenen Produkte der Absorption der Schadstoffe durch die Aktivkohle aus dem mindestens einen ersten Filter (1).

12. Ein Verfahren nach Anspruch 11, **dadurch gekennzeichnet, dass** der Schritt des Entfernens der zurückgehaltenen Produkte der Absorption der Schadstoffe durch die Aktivkohle aus dem mindestens einen ersten Filter (1) das Abziehen von mindestens einem Teil des austretenden Wassers aus dem mindestens einen ersten Filter (1) und das Wiedereinleiten von mindestens einem Teil des am Auslass aus dem mindestens einen ersten Filter (1) abgezogenen Wassers im Gegenstrom in den mindestens einen ersten Filter (1) aufweist.

13. Ein Verfahren nach Anspruch 12, **dadurch gekennzeichnet, dass** es aufweist: Einleiten des im Gegenstrom in den mindestens einen ersten Filter (1) eingeleiteten Wassers in einen zweiten Tank (3), wobei das Wasser auf diese Weise mit den Produkten der Absorption der Schadstoffe durch die Aktivkohle versetzt wird, Abziehen des enthaltenen Wassers aus dem zweiten Tank (3) und Filtern des aus dem weiteren Tank (3) abgezogenen Wassers mittels eines weiteren Filters (5).

14. Ein Verfahren nach Anspruch 13, **dadurch gekennzeichnet, dass** der weitere Filter (5) von dem Typ ist, der eine Filterschicht oder ein Filtervlies umfasst, der bzw. das geeignet ist, die Produkte der Absorption der Schadstoffe durch Aktivkohle zurückzuhalten, dass der Filterschicht oder das Filtervlies entfernbar ist und dass das Verfahren das Entfernen der Filterschicht oder des Filtervlieses von dem weiteren Filter (5) und dann das Entfernen der Produkte der Absorption der Schadstoffe durch die Aktivkohle von dem weiteren Filter (5) aufweist.

## Revendications

1. Système de filtration pour eaux contaminées par des polluants, en particulier pour éliminer ou au moins réduire la concentration de métaux lourds et/ou de HAP desdites eaux contaminées, ledit système comprenant un conduit (C) pour le transit de ladite eau contaminée, dans lequel il comprend un réservoir (S) avec des poudres de charbon actif en communication avec ledit conduit (C) pour le transit de ladite eau contaminée par des moyens d'introduction (10) adaptés pour introduire lesdites poudres de charbon actif dans ledit conduit actif (C), dans lequel ledit système comprend au moins un filtre (1) pour ladite eau polluée avec lesdites poudres de charbon actif ajoutées en communication avec ledit conduit (C), ledit au moins un premier filtre (1) étant adapté pour séparer les produits de l'absorption desdits polluants par ledit charbon actif de ladite eau contaminée et pour retenir lesdits produits d'absorption, ledit système étant **caractérisé en ce qu'**il comprend des moyens (11) pour éliminer des gaz éventuels dudit conduit (C), **en ce que** lesdits moyens (11) pour éliminer lesdits gaz éventuels sont mis en communication avec ledit conduit (C) en aval du point d'introduction desdites poudres de charbon actif dans ledit conduit (C) et en amont dudit au moins un premier filtre (1) pour lesdites eaux polluées ajoutées avec lesdites poudres de charbon actif.

2. Système selon la revendication 1, **caractérisé en ce qu'**il comprend au moins deux desdits premiers filtres (1) adaptés pour séparer lesdits produits de l'absorption desdits polluants par ledit charbon actif desdites eaux contaminées et pour retenir lesdits produits de l'absorption desdits polluants par ledit charbon actif, et **en ce que** lesdits au moins deux premiers filtres (1) sont disposés en parallèle et peuvent donc alternativement être reliés audit et isolés dudit conduit (C), et donc **en ce que** ladite eau contaminée peut être traitée en continu au moyen desdits au moins deux filtres (1).

3. Système selon la revendication 2, **caractérisé en ce que** chacun desdits au moins deux premiers filtres (1) est alternativement reliable audit et isolable dudit conduit (C) au moyen d'au moins une vanne interposée entre chacun desdits au moins deux premiers filtres (1) et ledit conduit (C).

4. Système selon l'une des revendications 1 à 3, **caractérisé en ce qu'**il comprend des moyens de régénération dudit au moins un filtre adapté pour éliminer lesdits produits retenus de la réaction entre ledit charbon actif et lesdits polluants dudit au moins un premier filtre (1).

5. Système selon la revendication 4, **caractérisé en ce que** lesdits moyens de régénération dudit au moins un filtre comprennent une première pompe (2) en communication avec ledit conduit (C) en aval dudit au moins un premier filtre (1), **en ce que** ladite première pompe (2) est ainsi adaptée pour retirer au moins partiellement les eaux sortantes dudit au moins un premier filtre (1), et **en ce que** ladite première pompe (2) est en communication avec ledit au moins un premier filtre (1) et adaptée pour réintroduire au moins une partie des eaux sortantes dudit au moins un premier filtre (1) dans ledit au moins un premier filtre (1), puis pour éliminer lesdits produits retenus de l'absorption desdits polluants par ledit charbon actif dudit au moins un premier filtre (1).

6. Système selon la revendication 5, **caractérisé en ce qu'**il comprend un deuxième réservoir (3) en communication avec ledit au moins un premier filtre (1) et adapté pour recevoir les eaux introduites à contre-courant dans ledit au moins un premier filtre (1) au moyen de ladite première pompe (2), lesdites eaux étant ensuite ajoutées auxdits produits de l'absorption desdits polluants par ledit charbon actif.

7. Système selon la revendication 6, **caractérisé en ce qu'**il comprend un autre filtre (5) positionné en aval dudit deuxième réservoir (3) et adapté pour filtrer davantage les eaux sortantes dudit deuxième réservoir (3) et ajoutées avec lesdits produits de l'absorption desdits polluants par ledit charbon actif.

8. Système selon la revendication 7, **caractérisé en ce que** ledit filtre supplémentaire (5) est du type comprenant une bande ou une courroie filtrante adaptée pour retenir lesdits produits de l'absorption desdits polluants par ledit charbon actif.

9. Système selon la revendication 8, **caractérisé en ce que** ladite courroie ou bande filtrante est amovible, dans lequel le retrait de ladite courroie ou bande filtrante entraîne l'élimination desdits produits de l'absorption desdits polluants par ledit charbon actif dudit autre filtre (5).

10. Système de traitement des fumées générées par la combustion d'huile lourde, ledit système comprenant un épurateur et des moyens d'introduction d'eau dans ledit épurateur, **caractérisé en ce qu'**il comprend un système selon l'une des revendications 1 à 9, **en ce que** ledit épurateur est mis en communication avec ledit conduit (C) en amont dudit premier réservoir (S) avec des poudres de charbon actif, et donc **en ce que** les eaux sortantes dudit épurateur sont introduites dans ledit conduit (C) en amont dudit premier réservoir (S) avec des poudres de charbon actif.

11. Procédé de filtration des eaux contaminées par des polluants, en particulier pour éliminer les métaux lourds et/ou les HAP desdites eaux contaminées au moyen d'un système selon l'une des revendications 1 à 9, ledit procédé comprenant les étapes consistant à : introduire lesdites poudres de charbon actif dans ledit conduit (C) ;
filtrer lesdites eaux polluées ajoutées avec lesdites poudres de charbon actif au moyen dudit au moins un premier filtre (1) ;
séparer les produits de l'absorption desdits polluants par ledit charbon actif desdites eaux contaminées au moyen dudit au moins un premier filtre (1) ; éliminer lesdits produits retenus de l'absorption desdits polluants par ledit charbon actif dudit au moins un premier filtre (1).

12. Procédé selon la revendication 11, **caractérisé en ce que** ladite étape d'élimination desdits produits retenus de l'absorption desdits polluants par ledit charbon actif dudit au moins un premier filtre (1) comprend le retrait d'au moins une partie des eaux sortantes dudit au moins un premier filtre (1), et la réintroduction à contre-courant d'au moins une partie de l'eau retirée à la sortie dudit au moins un premier filtre (1) dans ledit au moins un premier filtre (1).

13. Procédé selon la revendication 12, **caractérisé en ce qu'**il comprend l'introduction de l'eau introduite à contre-courant dans ledit au moins un premier filtre (1) dans un deuxième réservoir (3), lesdites eaux étant ainsi ajoutées auxdits produits de l'absorption desdits polluants par ledit charbon actif, le retrait des eaux contenues dudit deuxième réservoir (3), et la filtration des eaux retirées dudit autre réservoir (3) au moyen d'un autre filtre (5).

14. Procédé selon la revendication 13, **caractérisé en ce que** ledit autre filtre (5) est du type comprenant une bande ou une bande filtrante adaptée pour retenir lesdits produits de l'absorption desdits polluants par le charbon actif, **en ce que** ladite courroie ou bande filtrante est amovible, et **en ce que** ledit procédé comprend l'enlèvement de ladite courroie ou bande filtrante dudit autre filtre (5), puis l'élimination desdits produits de l'absorption desdits polluants par ledit charbon actif dudit autre filtre (5).
